# EUROPEAN PATENT APPLICATION

(11) **EP 4 238 721 A1**
(43) Date of publication of application: **06.09.2023**
(21) Application number: 21902954.3
(22) Date of filing: 14.09.2021
(51) Int. Cl.: B25J 13/08

(54) **CONTROL DEVICE, CONTROL METHOD, AND PROGRAM**

(30) Priority: 09.12.2020 JP 2020204430
(71) Applicant: OMRON Corporation, Kyoto 600-8530 (JP)
(72) Inventor: TONOGAI, Norikazu, Kyoto-shi, Kyoto 600-8530 (JP); MATSUMOTO, Shinya, Kyoto-shi, Kyoto 600-8530 (JP)
(74) Representative: Isarpatent
(86) International application number: PCT/JP2021/033780
(87) International publication number: WO 2022/123850

(57) **Abstract**

A control device for a robot including a three-dimensional sensor includes a definer that defines a scan area being an area measurable by the three-dimensional sensor and an object-free area being an area in which the robot is permitted to move to measure the scan area, and an operation controller that moves the three-dimensional sensor to measure the scan area by controlling an operation of the robot to cause the robot to move within the object-free area.

## Description

### FIELD

The present invention relates to a control device, a control method, and a program.

### BACKGROUND

For safe operation at manufacturing or other sites, an area including an object (contact area) within a predetermined area is determined in advance.

Patent Literature 1 describes a robot control device that determines an area (contact area) including an object by obtaining depth data at each point on the surface of the object using a depth sensor (a three-dimensional or 3D sensor) on a robot.

### CITATION LIST

### PATENT LITERATURE

Patent Literature 1: Japanese Unexamined Patent Application Publication No. 2018-089728

### SUMMARY

### TECHNICAL PROBLEM

The robot control device described in Patent Literature 1 obtains depth data with the depth sensor moving while the posture of the robot is being changed. The robot control device then determines an area including an object (contact area) based on the depth data. However, no method is described for determining the position of the depth sensor.

In an initial stage of movement of the robot, a system engineer with expert skills may determine a 3D space in which the arm of the robot with axes may be movable relative to objects nearby and may predesign an operation program that allows the robot to move without colliding with nearby objects. Further, operators with no expert know-how (preliminary knowledge) cannot visually determine the space for such an initial operation of the robot when moving the robot. Thus, the robot moved by such operators may collide with objects nearby. In designing (generating) an operation of a robot with a 3D simulator, the range in which the robot is movable is not visualized. Such designing also involves expert skills.

A contact area determined without any work of a person having expert skills can cause the robot or the depth sensor to collide with an object, possibly causing safety concerns.

One or more aspects of the present invention are directed to a technique for determining an area including an object using a 3D sensor with less safety concerns without the work of a person having expert skills.

### SOLUTION TO PROBLEM

In response to the above, the technique according to one or more aspects of the present invention has the structure described below.

A control device according to one aspect of the present invention is a control device for a robot including a three-dimensional sensor. The control device includes a definer that defines a scan area being an area measurable by the three-dimensional sensor and an object-free area being an area in which the robot is permitted to move to measure the scan area, and an operation controller that moves the three-dimensional sensor to measure the scan area by controlling an operation of the robot to cause the robot to move within the object-free area.

With this structure, the robot can measure the scan area while moving within the object-free area as a safe range. This structure thus allows measurement of the scan area using the three-dimensional sensor (determination of the contact area) with less safety concerns. Once the object-free area is defined, the robot moves within the object-free area (inside the object-free area) alone. This structure eliminates the work of a person having expert skills in predesigning a control program for the robot or measuring the scan area while manually moving the robot. In other words, this structure can measure the scan area using the three-dimensional sensor without the work of a person having expert skills.

In the above control device, the definer may define the object-free area based on information input into the control device with a user operation. This structure allows the user to define an area intended by the user as the object-free area. The user can also change (correct) the object-free area as appropriate.

In the above control device, the definer may define the object-free area to include an area in which the robot is moved previously by a user. This structure allows the user to define the object-free area to include the area in which the robot has actually been moved by the user. The user can thus intuitively define the object-free area.

In the above control device, the definer may define the object-free area based on an area in which the robot is located. This structure can define, for example, a range including and around the robot as the object-free area. Thus, an appropriate range in which the robot is highly likely to move can be defined as the object-free area.

In the above control device, the definer may define the object-free area to exclude an area in which an object other than the robot is located. This structure prevents the robot from moving into an area in which an object other than the robot is located. This allows measurement of the scan area with less safety concerns.

In the above control device, the definer may define the object-free area to exclude a predefined area in which the robot is prohibited from moving. This structure prevents the robot from moving into a predefined area in which the robot is prohibited from moving. This allows measurement of the scan area with less safety concerns.

In the above control device, the definer may define the object-free area based on a movable range of the robot. This structure can define the maximum range in which the robot can move as the object-free area, thus allowing the three-dimensional sensor to measure the scan area at more flexible positions. This improves the accuracy of measuring the scan area.

In the above control device, the definer may define the object-free area based on a measurement specification of the three-dimensional sensor.

In the above control device, the measurement specification of the three-dimensional sensor may include information about a shortest measurable distance of the three-dimensional sensor. The definer may define the object-free area to include an area resulting from expanding a movable range of the robot by a length corresponding to the shortest measurable distance.

In the above control device, the measurement specification of the three-dimensional sensor may include information about a longest measurable distance of the three-dimensional sensor. The definer may define, as the scan area, an area resulting from expanding the movable range of the robot by a length corresponding to the longest measurable distance and excluding the object-free area. This prevents the scan area from including an area unmeasurable by the three-dimensional sensor and allows more efficient measurement of the scan area.

In the above control device, the definer may update the object-free area based on a result of measurement of the scan area performed by the three-dimensional sensor. The operation controller may move the three-dimensional sensor to measure the scan area by controlling the operation of the robot to cause the robot to move within the object-free area updated by the definer. This structure can expand the object-free area in response to every determination of a safe area after measuring the scan area safely in an initial stage in which a safe area is unknown. The object-free area can be gradually expanded to allow measurement of a gradually larger range, thus allowing measurement of a larger scan area.

The above control device may further include a display that displays the object-free area or the scan area. This structure allows the user to intuitively identify an area (scan area) for measurement (scanning) or an area (object-free area) in which the robot is likely to move or both the areas. The user can thus easily correct the displayed scan area or the displayed object-free area or both the areas to each have a more appropriate size, range, and position. This facilitates defining of an object-free area safer for measuring an appropriate scan area, thus allowing measurement of the scan area using the three-dimensional sensor with further less safety concerns.

In the above control device, the definer may define the scan area to exclude the object-free area.

A robot may include the above control device and a three-dimensional sensor that measures a scan area.

One or more aspects of the present invention may be directed to an apparatus including at least one of the above elements, or to an electronic device, a control system, a scan system, or a scan device. One or more aspects of the present invention may also be directed to a control method for a robot including at least one of the above processes, or to an area defining method or a scan method. One or more aspects of the present invention may be directed to a program for implementing any of these methods or to a non-transitory storage medium storing the program. The above elements and processes may be combined with one another in any manner to form one or more aspects of the present invention.

### ADVANTAGEOUS EFFECTS

The technique according to the above aspects of the present invention allows determination of an area including an object with less safety concerns using the 3D sensor without the work of a person having expert skills.

### BRIEF DESCRIPTION OF THE DRAWINGS

[FIG. 1] FIG. 1 is a diagram describing a scan system according to a first embodiment.
[FIG. 2] FIG. 2 is a block diagram of a control device according to the first embodiment showing its internal structure.
[FIG. 3] FIG. 3 is a flowchart of a contact area determination process in the first embodiment.
[FIG. 4] FIG. 4A is a diagram describing display of a UI in the first embodiment, and FIG. 4B is a diagram describing defining of an object-free area or another area in the first embodiment.
[FIG. 5] FIG. 5 is a diagram describing defining of an object-free area or another area in the first embodiment.
[FIG. 6] FIGs. 6A and 6B are diagrams describing defining of an object-free area or another area in the first embodiment.
[FIG. 7] FIGs. 7A and 7B are diagrams describing defining of an object-free area or another area in the first embodiment.
[FIG. 8] FIG. 8 is a diagram describing defining of an object-free area or another area in the first embodiment.

### DETAILED DESCRIPTION

Embodiments of the present invention will now be described with reference to the drawings.

### <Example Use>

A scan system 1 including a control device 30 will now be described. The scan system 1 measures (scans) a scan area 50 at multiple measurement positions with a three-dimensional (3D) sensor 20 to determine an area including an object (contact area) in the scan area 50. For this determination, the robot 10 including the 3D sensor 20 moves within a predetermined object-free area 70 without moving out of the object-free area 70 and measures (scans) the scan area 50. After the contact area is determined, for example, the robot 10 can avoid entering the contact area. The robot 10 can thus move inside the scan area 50, in addition to moving inside the object-free area 70, without colliding with an object in the scan area 50. A machine other than the robot 10 can also move inside the scan area 50 without colliding with an object. Each measurement position herein refers to the 3D coordinates and the orientation (optical axis direction) of the 3D sensor 20.

This structure allows measurement of the scan area 50 to be performed by the robot 10 while the robot 10 is moving within a safe range defined as the object-free area 70, thus allowing determination of an area including an object (contact area) using the 3D sensor 20 with less safety concerns.

### <First Embodiment>

### [Structure of Scan System]

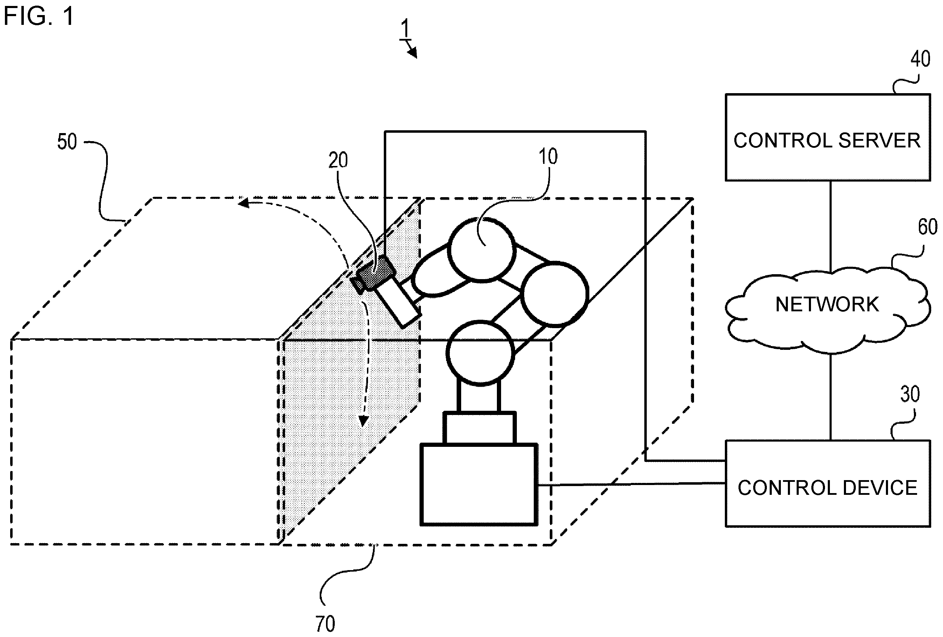

The scan system 1 according to the first embodiment will now be described with reference the system diagram of FIG. 1. The scan system 1 includes the robot 10, the 3D sensor 20, the control device 30, and a control server 40.

The robot 10 changes the posture to move the 3D sensor 20. The robot 10 may be any robot such as a vertically articulated robot, a mover robot, a parallel link robot, or a linear robot. In the present embodiment, the robot 10 is an articulated robot that includes an arm with multiple joints and controls the angle of each joint to control the position (orientation) of the 3D sensor 20. Each joint includes a drive shaft drivable by a motor to rotate the arm.

The robot 10 can move in the object-free area 70 alone, which is defined by the control device 30. More specifically, the object-free area 70 is an area in which the robot 10 (3D sensor 20) is permitted to move (or may move) to measure the scan area 50. Thus, the robot 10 cannot move out of (outside) the object-free area 70.

The 3D sensor 20 measures (scans) the scan area 50 to obtain 3D information (point cloud data) about the scan area 50. The 3D sensor 20 is located at the end of the arm in the robot 10. In other words, the 3D sensor 20 is included in the robot 10. The 3D sensor 20 is, for example, a depth sensor that obtains depth information or a range image sensor that obtains range images. The 3D sensor 20 repeatedly measures (scans) the scan area 50 at multiple different measurement positions to determine a contact area in the scan area 50. The 3D sensor 20 may include a camera (imaging unit) to capture or obtain a two-dimensional (2D) image, in addition to 3D information. The 3D sensor 20 may include an illuminator that illuminates the scan area 50 with light or a projector that projects an image.

The 3D sensor 20 may use either an active method or a passive method to calculate the distance from the 3D sensor 20 to an object in the scan area 50. The active method is to calculate the distance by projecting light from the 3D sensor 20 onto an object and receiving reflected light from the object. The passive method is to calculate the distance by receiving light from an object illuminated with natural or other light. The active method may include, for example, projecting infrared light to an object with a projector, receiving infrared light reflected from the object with a camera, and calculating the distance to the object based on the principle of triangulation (a method using spotlight, or a time-of-flight or TOF method). The active method may include, for example, projecting a pattern image onto an object with a projector, capturing the pattern image on the object with a camera, and calculating the distance to the object based on distortion of the captured pattern image. The passive method may include capturing two images of an object at two different positions and calculating the distance based on the difference between the two images.

The control device 30 controls the robot 10 and the 3D sensor 20. The control device 30 controls the posture (the movement or the arm joint angles) of the robot 10 to control the measurement position (the orientation or viewpoint) of the 3D sensor 20. The control device 30 also controls the time for measurement performed by the 3D sensor 20. Further, the control device 30 determines the contact area based on the results of measurement performed by the 3D sensor 20.

The control server 40 controls multiple control devices 30 with a network 60. The control server 40 may include some or all of the components included in each control device 30. For example, the control server 40 may include a definer 300 and a display 309 (both described later), and may simply define the object-free area 70 and the scan area 50.

### [Structure of Control Apparatus]

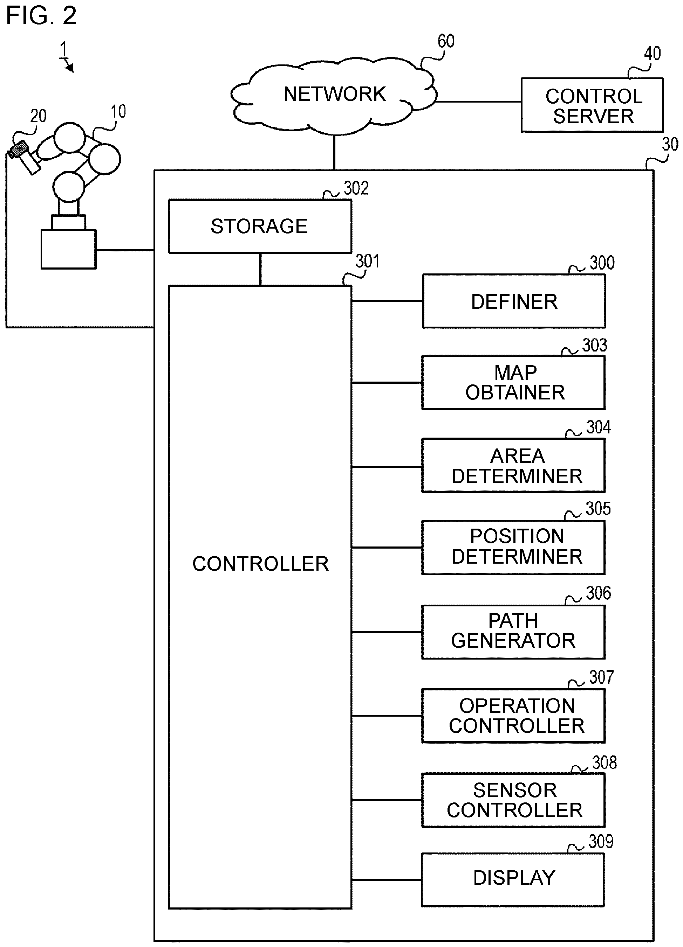

The internal structure of the control device 30 will now be described with reference to the block diagram of FIG. 2. The control device 30 includes a definer 300, a controller 301, a storage 302, a map obtainer 303, an area determiner 304, a position determiner 305, a path generator 306, an operation controller 307, a sensor controller 308, and a display 309.

The definer 300 defines the scan area 50 and the object-free area 70. The definer 300 defines, as the scan area 50, an area determined to be a measurement target area. The definer 300 defines, as the object-free area 70, an area determined not to include an object and determined to be an area in which the robot 10 may be moved. A process (method) performed by the definer 300 for defining the object-free area 70 or the scan area 50 will be described in detail later.

The robot 10 moving freely may come in contact with an object when the object-free area 70 and the scan area 50 are defined. Before the object-free area 70 and the scan area 50 are defined, the robot 10 thus remains stationary unless the user directly moves the robot 10. More specifically, when the object-free area 70 and the scan area 50 are defined for the first time, these areas are defined without using any results of measurement performed by the 3D sensor 20.

The controller 301 controls each component of the control device 30 in accordance with a program stored in the storage 302. The processing performed by the controller 301 may be performed by the control server 40.

The storage 302 stores information for the components to operate. The storage 302 stores, for example, information for specifying the scan area 50 or the object-free area 70 (information indicating the position, size, or shape of the area). Multiple scan areas 50 and multiple object-free areas 70 may be defined. The storage 302 may store information specifying such multiple scan areas 50 and multiple object-free areas 70. The storage 302 also stores the measurement specifications of the 3D sensor 20 (e.g., the measurable distance range and the viewing angle) and the specifications of the robot 10 (e.g., the movable ranges of the arm joints and the rotational speeds of the joints). These items of information can be preset by the user for the control device 30.

The storage 302 also stores map information indicating the state of measurement (scanning) performed by the 3D sensor 20 for points in the scan area 50 (e.g., voxels, or 3D information such as point clouds). The points in the scan area 50 correspond to different subareas (e.g., areas of a cubic or 3D mesh). For example, each point in the scan area 50 corresponds to the center of the corresponding subarea (the center of gravity). The storage 302 stores, for the subarea corresponding to each point in the scan area 50, map information indicating whether the subarea is a determined-subarea determined to include or not to include an object or an undetermined-subarea undetermined to include or not to include an object. The map information indicates whether the determined-subarea is an object subarea determined to include an object or an empty subarea determined not to include an object. In other words, the map information indicates each point in the scan area 50 being any one of a point with an object, a point without an object, or a point undetermined to be with or without an object.

The map obtainer 303 generates or updates the above map information based on the results of measurement or scanning performed by the 3D sensor 20. More specifically, the map obtainer 303 generates (updates) map information based on the results of measurement of the scan area 50 (multiple measurement ranges) performed by the 3D sensor 20 at multiple measurement positions.

For example, the map obtainer 303 performs coordinate transformation based on the measurement positions to transform 3D information (depth data) at each point on the surface of the object defined in the sensor coordinate system (the coordinate system for the 3D sensor 20) into 3D position information defined in the robot coordinate system (the coordinate system for the robot 10). The map obtainer 303 can thus determine the position of the object indicated by the depth data in the robot coordinate system. When the 3D sensor 20 measures the scan area 50 at different measurement positions, the map obtainer 303 can obtain different sets of depth data. This increases the reliability of determination as to whether an object is at each point (in each subarea) in the scan area 50. Based on the reliability, the map obtainer 303 determines (defines) the subarea corresponding to each point to be the undetermined-subarea, the object subarea, or the empty subarea.

The area determiner 304 defines (determines) the contact area based on the results of measurement (scanning) performed by the 3D sensor 20. More specifically, the area determiner 304 defines, as the contact area, the area including object subareas based on the map information.

The position determiner 305 determines multiple measurement positions (movement positions, or the 3D coordinates and the orientations) to be measured by the 3D sensor 20. The position determiner 305 may determine multiple candidates for measurement positions and select, from the candidates, measurement positions to which the 3D sensor 20 is movable (to which the robot 10 can move the 3D sensor 20). Each measurement position of the 3D sensor 20 can be specified based on, for example, the height of the 3D sensor 20 or the optical axis direction of the 3D sensor 20. Each measurement position of the 3D sensor 20 may be specified based on the posture of the robot 10. The correspondence between the measurement position (position) of the 3D sensor 20 and the posture of the robot 10 is premeasured (predetermined) through calibration.

The path generator 306 (path determiner) generates (determines) a movement path for the robot 10 to move along to cause the 3D sensor 20 to move between the multiple measurement positions determined by the position determiner 305. For example, the path generator 306 determines a movement path that minimizes the time taken to move the 3D sensor 20 to all the measurement positions.

The operation controller 307 controls the operation of the robot 10 to move the 3D sensor 20 to the multiple measurement positions. The operation controller 307 thus shifts the range to undergo measurement performed by the 3D sensor 20 (measurement range) to the range corresponding to each measurement position. The operation controller 307 controls the posture of the robot 10 along the movement path determined by the path generator 306 to control the position (the coordinates and the orientation) of the 3D sensor 20.

The sensor controller 308 controls the 3D sensor 20. The sensor controller 308 controls the 3D sensor 20 to perform measurement upon, for example, the robot 10 moving the 3D sensor 20 to each measurement position. For the 3D sensor 20 including an illuminator, the sensor controller 308 may control, for example, the amount of light (brightness) of the illuminator.

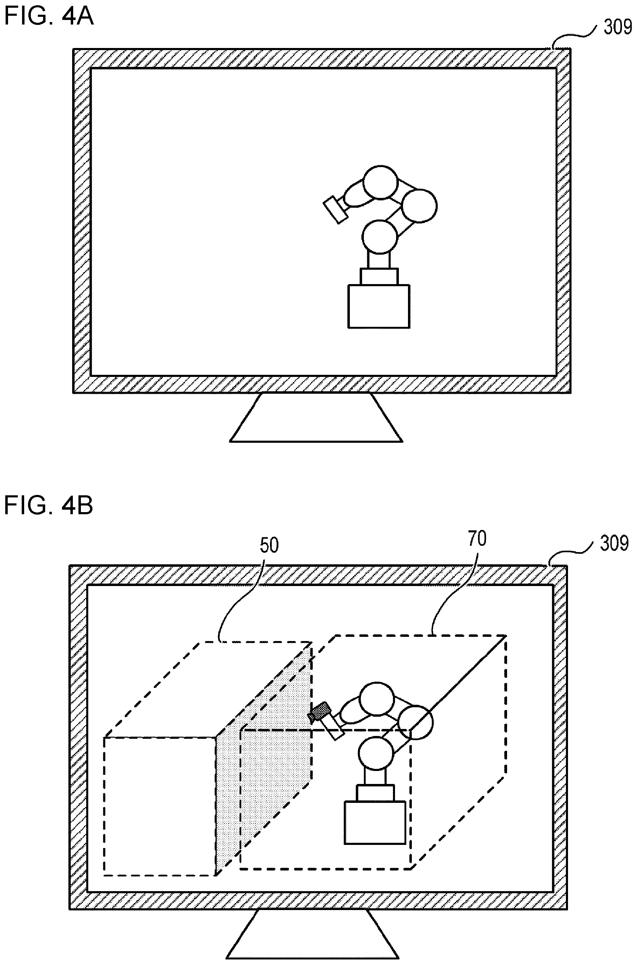

The display 309 three-dimensionally displays the robot 10, the scan area 50, and the object-free area 70 (refer to FIG. 4B). The display 309 may display either the scan area 50 or the object-free area 70. When either the scan area 50 or the object-free area 70 is displayed, the displayed area is not visually obstructed by the other area being displayed. The user uses a user interface (Ul) appearing on the display 309 to define the scan area 50 and the object-free area 70 with an operation member (not shown), such as a mouse, a keyboard, or a touchscreen. The display 309 may be a display panel (display) to display an image or may be a projector that projects an image onto a screen. In this manner, the scan area 50 and the object-free area 70 displayed three-dimensionally allow the user to intuitively identify an area (scan area 50) to be measured (scanned) and an area (object-free area 70) in which the robot 10 is likely to move. The user can also easily correct the displayed scan area 50 and the displayed object-free area 70 to each have a more appropriate size, range, and position by operating an operation member (not shown). This facilitates defining of an object-free area 70 safer for measuring an appropriate scan area 50, thus allowing determination of an area including an object (contact area) using the 3D sensor 20 with further less safety concerns. After identifying the scan area 50 and the object-free area 70, the user can expect that other areas are not used for scanning. The user can thus determine, for example, the installation location for a power supply or peripheral devices for the robot 10.

The control device 30 may be a computer including, for example, a central processing unit (CPU) (processor), a memory, and a storage. In this case, the components shown in FIG. 2 are implemented by loading a program stored in the storage into the memory and executing the program with the CPU. The computer may be a general-purpose computer such as a personal computer, a server computer, a tablet, or a smartphone, or a built-in computer such as an onboard computer. In some embodiments, some or all of the components shown in FIG. 2 may be formed using an application-specific integrated circuit (ASIC) or a field-programmable gate array (FPGA). In some embodiments, some or all of the components shown in FIG. 2 may be implemented by cloud computing or distributed computing.

### [Contact Area Determination Process]

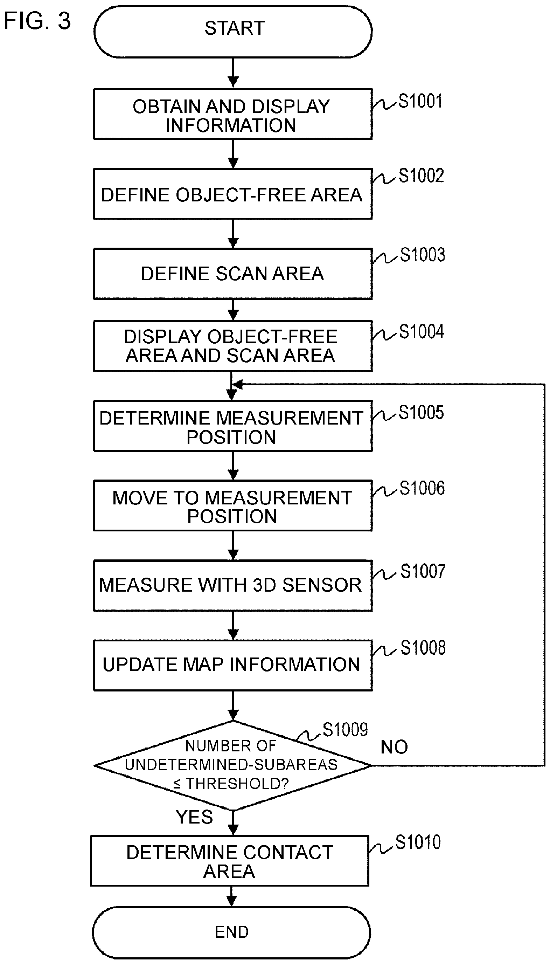

A process performed by the control device 30 for determining a contact area will now be described with reference to FIG. 3. FIG. 3 is a flowchart showing the contact area determination process. The processing in each step in the flowchart in FIG. 3 is performed by the controller 301 executing a program stored in the storage 302 or by other components controlled by the controller 301.

In step S1001, the controller 301 obtains computer-aided design (CAD) information about the robot 10 from the storage 302. As shown in FIG. 4A, the controller 301 then three-dimensionally renders (represents) the robot 10 based on the CAD information and displays the robot 10 on the UI (display 309). The user can thus readily identify the placement position of the robot 10. The controller 301 may three-dimensionally render (represent) the robot 10 and the 3D sensor 20 on the display 309. The controller 301 may also obtain CAD information about the robot 10 from an external device such as the control server 40.

In step S1002, the definer 300 defines the object-free area 70. In step S1003, the definer 300 defines the scan area 50. The processing in steps S1002 and S1003 will be described in detail later.

In step S1004, the display 309 further renders and displays the object-free area 70 and the scan area 50 on the UI on which the robot 10 (and the 3D sensor 20) has been three-dimensionally rendered. The positional relationship between the robot 10, the object-free area 70, and the scan area 50 appearing on the UI is the same as the actual positional relationship between the robot 10, the object-free area 70, and the scan area 50. For example, the sizes and the positions of the object-free area 70 and the scan area 50 may be adjustable in response to a user operation. The display 309 may display either the scan area 50 or the object-free area 70.

In step S1005, the position determiner 305 determines the measurement position (the 3D coordinates and the orientation) of the 3D sensor 20 within the object-free area 70. The position determiner 305 may determine, as a current measurement position, a position adjacent to an immediately preceding measurement position or a measurement position that allows measurement of many undetermined-subareas. In other words, the position determiner 305 may determine any measurement position within the object-free area 70.

In step S1006, the operation controller 307 moves the 3D sensor 20 (robot 10) to the measurement position determined by the position determiner 305. The operation controller 307 controls the operation of the robot 10 to avoid moving out of the object-free area 70 (or controls the operation of the robot 10 to move within the object-free area 70).

In step S1007, the sensor controller 308 controls the 3D sensor 20 to measure the scan area 50 at the measurement position after the movement. This allows the 3D sensor 20 to obtain 3D information (point cloud data) for the scan area 50. The 3D sensor 20 outputs the 3D information to the control device 30.

In step S1008, the map obtainer 303 updates (generates) map information based on the information about the measurement position and on the 3D information (point cloud data) resulting from the 3D sensor 20 measuring the scan area 50.

In step S1009, the controller 301 determines whether measurement has been performed sufficiently across the scan area 50. More specifically, the controller 301 determines whether the number of undetermined-subareas indicated by the map information is less than or equal to a threshold Th. When the number of undetermined-subareas is less than or equal to the threshold Th, the scan area 50 is determined to have undergone sufficient measurement. The processing then advances to step S1010 for determining the contact area. When the number of undetermined-subareas is greater than the threshold Th, the scan area 50 is determined to have undergone insufficient measurement. The processing then returns to step S1005.

In step S1009, the controller 301 may determine whether the scan area 50 has undergone sufficient measurement based on whether the measurement is performed at least a predetermined number of times. In this case, the processing advances to step S1010 when the 3D sensor 20 has measured the scan area 50 at least a predetermined number of times. Otherwise, the processing advances to step S1005.

In step S1010, the area determiner 304 determines the contact area including an object based on the map information. More specifically, the area determiner 304 determines, based on the map information, the area including all the object subareas as the contact area.

### [Defining Object-Free Area and Scan Area]

A process (method) performed in steps S1002 and S1003 for defining the object-free area 70 and the scan area 50 will now be described in detail.

### (Defining Areas Using User Input)

The definer 300 can define the object-free area 70 and the scan area 50 in response to an input from the user (user operation). More specifically, when the processing in step S1001 is complete, the robot 10 and the 3D sensor 20 appear on the UI as shown in FIG. 4A. The user then refers to this information and inputs information about the object-free area 70 and the scan area 50 on the Ul.

For example, the user may input information about the object-free area 70 and the scan area 50 by inputting the coordinates of the object-free area 70 and the scan area 50 (e.g., the coordinates of two or more vertexes) on the Ul. In another example, the user may input information about the object-free area 70 and the scan area 50 by scaling up or down or moving the areas indicated by initial data about the object-free area 70 and the scan area 50 using, for example, a mouse on the UI displayed as shown in FIG. 4B. The definer 300 may allow the user to easily scale up or down or move the object-free area 70 and the scan area 50. For example, the definer 300 may define the smallest cylindrical area circumscribing the robot 10 as initial data for the object-free area 70. The definer 300 may define all the area other than the object-free area 70 in a predetermined area as the scan area 50.

The definer 300 may define any areas rendered freehand by the user on the UI as the object-free area 70 and the scan area 50. The definer 300 may define areas including unit voxels stacked on one another by the user on the UI as the object-free area 70 and the scan area 50. Further, the user may prepare CAD information indicating the object-free area 70 and the scan area 50, and may input the CAD information into the control device 30 to cause the definer 300 to define the object-free area 70 and the scan area 50 indicated by the CAD information.

The user may select the shapes of the object-free area 70 and the scan area 50 from predetermined shapes such as a sphere, a cylinder, a cone, a polygonal prism, a polygonal pyramid, a rectangular prism, and any other polyhedron. The definer 300 changes the shapes of the object-free area 70 and the scan area 50 to the selected shapes. The object-free area 70 and the scan area 50 may have the same shape or different shapes.

### (Defining Areas Based on Surrounding Information)

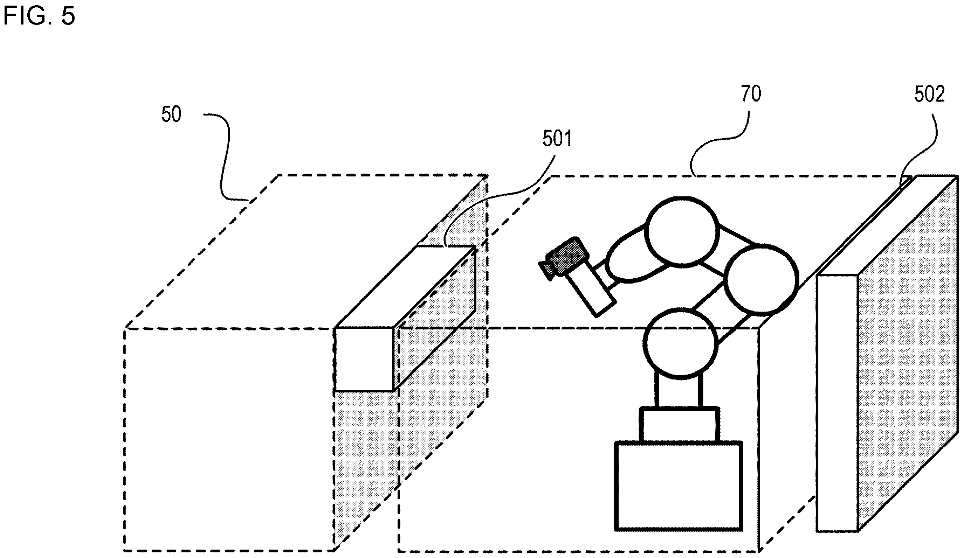

The definer 300 may define the object-free area 70 and the scan area 50 based on CAD information about the robot 10 and information about an object near the robot 10 (surrounding information, or CAD information about a surrounding object). The surrounding object herein is an object other than a robot, such as a cable, an end fixture, or an end effector. For example, the definer 300 may define, as the object-free area 70, an area including the position of the robot 10 (or an area centered on the robot position) and having any shape externally adjoining areas each including an object indicated by the surrounding information (an area adjoining and excluding the areas each including the object). As in the example shown in FIG. 5, the definer 300 may define the object-free area 70 in the shape of a rectangular prism adjoining an object 501 and an object 502. When the object-free area 70 is defined to externally adjoin the object 501 and the object 502, the definer 300 may define (determine) the object-free area 70 to have the shape that maximizes the volume of the object-free area 70, selectively from multiple shapes (e.g., a cylinder, a sphere, and a rectangle). The definer 300 may then define, as the scan area 50, an area other than the object-free area 70 and other than the areas indicated by the surrounding information.

The user may input (define), in advance, an area in which the robot 10 is prohibited from moving (operating) (non-operation area). In this case, the definer 300 may define the object-free area 70 and the scan area 50 to exclude the non-operation area. For example, the user may input the non-operation area including an area difficult to measure with the 3D sensor 20, such as an area surrounded by a net or an area including a glass object. This allows safer movement of the robot 10. This also allows highly accurate measurement of the scan area 50 with the 3D sensor 20.

### (Defining Areas Based on Movable Range of Robot)

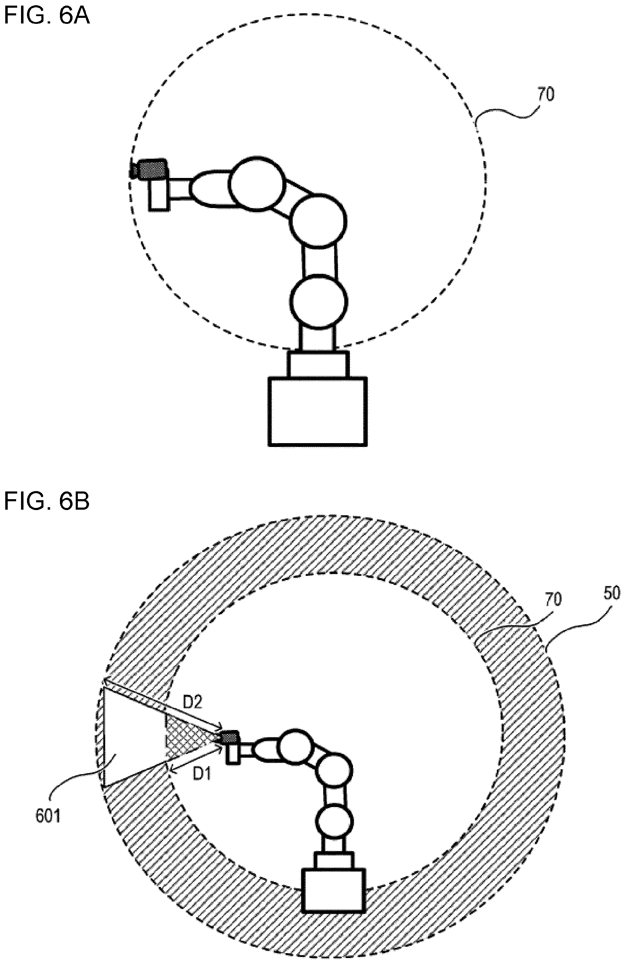

The definer 300 may define the object-free area 70 and the scan area 50 based on the defined movable range of the robot 10. More specifically, as shown in FIG. 6A, the definer 300 may define, using the settings about the arm of the robot 10, the movable range of the robot 10 (the range in which the robot 10 is either physically or functionally movable) as the object-free area 70. The movable range of the robot 10 may be specified based on, for example, the length of the arm of the robot 10 or the movement angle of each joint (axis). The definer 300 may define, as the scan area 50, an area excluding the object-free area 70.

### (Defining Areas Based on Measurement Specifications of 3D Sensor)

The definer 300 may define the object-free area 70 and the scan area 50 based on the defined movable range of the robot 10 and the measurement specifications of the 3D sensor 20. The measurement specifications of the 3D sensor 20 include information about the range in which measurement can be performed by the 3D sensor 20 (e.g., the measurable distance range and the viewing angle). As shown in FIG. 6B, the 3D sensor 20 can measure an area 601 alone between a position (closest position) at a first distance D1 (the shortest distance in the measurable distance range) from the 3D sensor 20 and a position (distant position) at a second distance D2 (the longest distance in the measurable distance range) from the 3D sensor 20. For example, the first distance D1 may be 30 cm, and the second distance D2 may be 100 cm.

As shown in FIG. 6B, the definer 300 may define, as the object-free area 70, an area resulting from expanding the movable range of the robot 10 (refer to FIG. 6A) by the first distance D1. More specifically, for the robot 10 having a spherical movable range, a sphere with a radius greater by the first distance D1 than the radius of the movable range is defined as the object-free area 70. As shown in FIG. 6B, the definer 300 may define, as the scan area 50, an area resulting from expanding the movable range area of the robot 10 (refer to FIG. 6A) by the second distance D2 (or the range in which measurement can be performed by the 3D sensor 20) and excluding the object-free area 70.

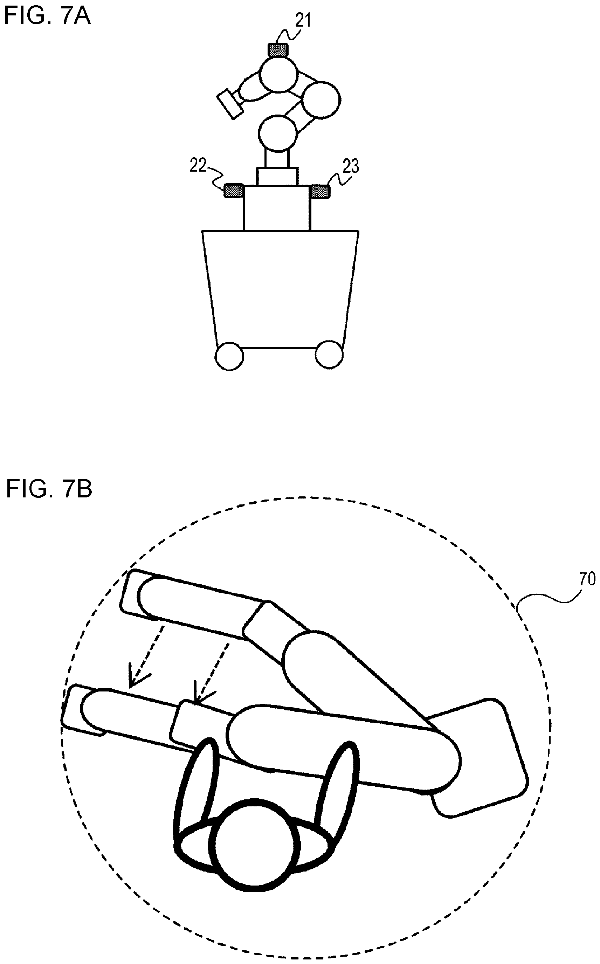

As shown in FIG. 7A, the robot 10 may include multiple 3D sensors 21 to 23. In this case, the definer 300 defines the object-free area 70 or the scan area 50 or both the areas based on the measurement specifications of all the 3D sensors 21 to 23. For example, the definer 300 may define the movable range of the robot 10 as the object-free area 70. The definer 300 may define, as the scan area 50, an area resulting from excluding the object-free area 70 from an area in which measurement can be performed by at least one of the 3D sensors 21 to 23.

### (Defining Areas Based on Range with Movement by User)

As shown in FIG. 7B, the definer 300 may define, as the object-free area 70, an area in which the user has directly moved the robot 10. This may be achieved by a technique referred to as direct teaching. This allows the user to intuitively define the object-free area 70. The definer 300 may define, as the scan area 50, an area other than the object-free area 70 selectively from predetermined areas (e.g., areas input in advance by the user). As described above, the definer 300 may define, as the scan area 50, an area resulting from expanding, by the second distance D2, the area in which the user has moved the robot 10 and excluding the object-free area 70.

### (Defining Areas Based on Map Information)

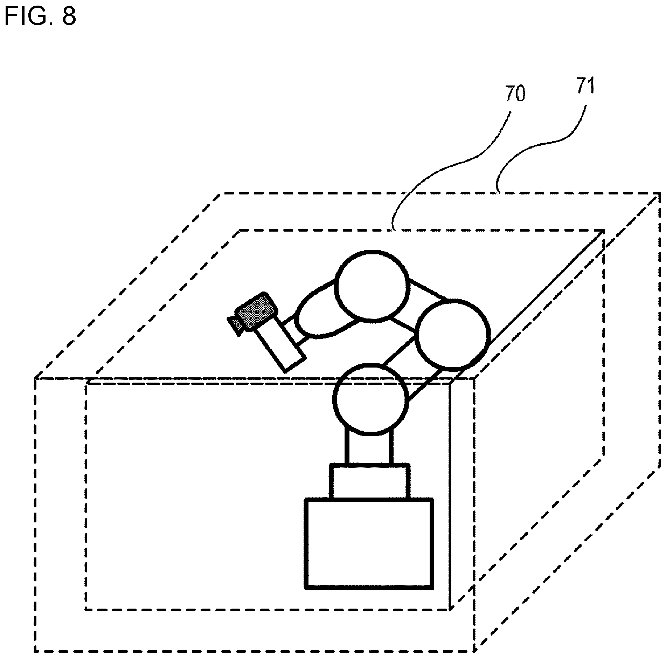

The definer 300 may also define (update) the object-free area 70 based on the map information. The definer 300 may update the object-free area 70 and may update the scan area 50 to exclude the updated object-free area 70. For example, after initially defining the object-free area 70 with any of the above methods, the definer 300 may update the object-free area 70 either every time the map is updated in step S1008 or every time a predetermined number of measurement processes are performed. More specifically, as shown in FIG. 8, the definer 300 may newly define, as an object-free area 71, an area including the current object-free area 70 and empty subareas (areas determined to include no object) adjoining the current object-free area 70 indicated by the map information. This can expand the object-free area 70 gradually, thus increasing the area (or range) in which measurement can be physically performed by the 3D sensor 20.

The object-free area 70 or the scan area 50 or both the areas may be updated by an updater or an operation recorder (not shown), instead of being updated by the definer 300. More specifically, the definer 300 may define the object-free area 70 and the scan area 50 without using the results of measurement performed by the 3D sensor 20, and then the updater may update the object-free area 70 and the scan area 50 using the results of measurement performed by the 3D sensor 20.

Although the multiple methods for defining the object-free area 70 and the scan area 50 are described above, any of these methods may be combined as appropriate. In some embodiments, the definer 300 may define, as the object-free area 70, an area resulting from excluding a non-operation area from an area input by the user. In other embodiments, the definer 300 may define, as the object-free area 70, an overlap area (overlap range) between the movable range of the robot 10 and the area input by the user. More specifically, the definer 300 may define (update), as a new object-free area 70, an overlap area of multiple object-free areas determined with any of the above methods.

The object-free area 70 is predefined in this manner. The robot 10 is then controlled not to move out of the object-free area 70 (to operate within the object-free area 70). This allows the robot 10 to move safely to measure the scan area 50.

In the above embodiment, the object-free area 70 is not measured directly by the 3D sensor 20, although the object-free area 70 may be measured together with the measurement of the scan area 50. Thus, the map information is likely to indicate the points corresponding to the object-free area 70 being undetermined-subareas. Thus, the map obtainer 303 may define, before or after the measurement of the scan area 50, each point in the map information corresponding to the object-free area 70 as an empty subarea (determined-subarea). The map obtainer 303 may define, before or after the measurement of the scan area 50, each point in the map information corresponding to the object-free area 70 to indicate the object-free area 70.

Although the display 309 includes, for example, a display panel for displaying an image in the present embodiment, the display 309 may include a head-mounted display (HMD) for displaying an image. The display (HMD) 309 may display a virtual reality (VR) image (full 360-degree spherical image) of the robot 10, the scan area 50, and the object-free area 70. In steps S1001 to S1004, the VR image can be generated with the robot 10, the scan area 50, and the object-free area 70 placed in the VR space. The generated VR image may also include an object near the robot 10 in the VR space. This allows the user to identify the positional relationship between the object and, for example, the object-free area by viewing the VR image. The display 309 (controller 301) changes a portion of the VR image to be displayed in response to a change in the orientation of the display 309. This allows the user to identify the scan area 50 and the object-free area 70 more accurately.

The display (HMD) 309 may display an augmented reality (AR) image instead of the VR image. More specifically, the user may view the real space through the display 309. The display (HMD) 309 may display an AR image of the robot 10, the scan area 50, and the object-free area 70 in a manner superimposed on the real space. The AR image can be generated with the same method as for the VR image described above. The display 309 (controller 301) changes a portion of the AR image to be displayed in response to a change in the orientation of the display 309. This allows the user to view the real space together with, for example, the object-free area 70 and identify the scan area 50 and the object-free area 70 more accurately (easily) than when a VR image is used.

Thus, the user can accurately identify the scan area 50 and the object-free area 70 using either the VR or AR image. The user can also easily correct (define) the displayed scan area 50 and the displayed object-free area 70 to each have a more appropriate size, range, and position by operating an operation member (not shown). This facilitates defining of an object-free area 70 safer for measuring an appropriate scan area 50, thus allowing determination of an area including an object (contact area) using the 3D sensor 20 with further less safety concerns.

The scope of the claims is construed without being limited to the features described in the embodiments described above. The scope of the claims is construed to include the scope understandable by those skilled in the art to solve intended issues in view of the common technical knowledge at the time of filing.

### (Appendix 1)

A control device (30) for a robot (10) including a three-dimensional sensor (20), the control device (30) comprising:
a definer (300) configured to define a scan area (50) being an area measurable by the three-dimensional sensor (20) and an object-free area (70) being an area in which the robot (10) is permitted to move to measure the scan area (50); and
an operation controller (307) configured to move the three-dimensional sensor (20) to measure the scan area (50) without causing the robot (10) to move out of the object-free area (70).

### (Appendix 2)

A control method for a robot (10) including a three-dimensional sensor (20), the control method comprising:
(S1002, S1003) defining a scan area (50) being an area measurable by the three-dimensional sensor (20) and an object-free area (70) being an area in which the robot (10) is permitted to move to measure the scan area (50); and
(S1006) moving the three-dimensional sensor (20) to measure the scan area (50) without causing the robot (10) to move out of the object-free area (70).

### REFERENCE SIGNS LIST

1: scan system, 10: robot, 20: 3D sensor, 30: control device,
40: control server, 50: scan area, 60: network, 70: object-free area,
300: definer, 301: controller, 302: storage, 303: map obtainer,
304: area determiner, 305: position determiner, 306: path generator, 307: operation controller, 308: sensor controller, 309: display

## Claims

1. A control device for a robot including a three-dimensional sensor, the control device comprising:
a definer configured to define a scan area being an area measurable by the three-dimensional sensor and an object-free area being an area in which the robot is permitted to move to measure the scan area; and
an operation controller configured to move the three-dimensional sensor to measure the scan area by controlling an operation of the robot to cause the robot to move within the object-free area.

2. The control device according to claim 1, wherein
the definer defines the object-free area based on information input into the control device with a user operation.

3. The control device according to claim 1 or claim 2, wherein
the definer defines the object-free area to include an area in which the robot is moved previously by a user.

4. The control device according to any one of claims 1 to 3, wherein
the definer defines the object-free area based on an area in which the robot is located.

5. The control device according to any one of claims 1 to 4, wherein
the definer defines the object-free area to exclude an area in which an object other than the robot is located.

6. The control device according to any one of claims 1 to 5, wherein
the definer defines the object-free area to exclude a predefined area in which the robot is prohibited from moving.

7. The control device according to any one of claims 1 to 6, wherein
the definer defines the object-free area based on a movable range of the robot.

8. The control device according to any one of claims 1 to 7, wherein
the definer defines the object-free area based on a measurement specification of the three-dimensional sensor.

9. The control device according to claim 8, wherein
the measurement specification of the three-dimensional sensor includes information about a shortest measurable distance of the three-dimensional sensor, and
the definer defines the object-free area to include an area resulting from expanding a movable range of the robot by a length corresponding to the shortest measurable distance.

10. The control device according to claim 9, wherein
the measurement specification of the three-dimensional sensor includes information about a longest measurable distance of the three-dimensional sensor, and
the definer defines, as the scan area, an area resulting from expanding the movable range of the robot by a length corresponding to the longest measurable distance and excluding the object-free area.

11. The control device according to any one of claims 1 to 10, wherein
the definer updates the object-free area based on a result of measurement of the scan area performed by the three-dimensional sensor, and
the operation controller moves the three-dimensional sensor to measure the scan area by controlling the operation of the robot to cause the robot to move within the object-free area updated by the definer.

12. The control device according to any one of claims 1 to 11, further comprising:
a display configured to display the object-free area or the scan area.

13. The control device according to any one of claims 1 to 12, wherein
the definer defines the scan area to exclude the object-free area.

14. A control method for a robot including a three-dimensional sensor, the control method comprising:
defining a scan area being an area measurable by the three-dimensional sensor and an object-free area being an area in which the robot is permitted to move to measure the scan area; and
moving the three-dimensional sensor to measure the scan area by controlling an operation of the robot to cause the robot to move within the object-free area.

15. A program for causing a computer to perform operations included in the control method according to claim 14.
